# EUROPÄISCHE PATENTANMELDUNG

(11) **EP 4 008 553 A1**
(43) Veröffentlichungstag der Anmeldung: **08.06.2022**
(21) Anmeldenummer: 21206344.0
(22) Anmeldetag: 04.11.2021
(51) Int. Cl.: B32B 37/06, B29D 99/00, B32B 23/08, B32B 29/02, B32B 37/12, B32B 37/18, B29C 43/18, B29K 311/12, B29K 401/00

(54) **VERFAHREN UND VORRICHTUNG ZUR HERSTELLUNG VON FORMTEILEN**

(30) Priorität: 02.12.2020 DE 102020132063
(71) Anmelder: Werzalit Deutschlang GmbH, 37339 Gernrode (DE)
(72) Erfinder: Golombek, Jörg, 71720 Oberstenfeld (DE); Troyer, Martin, 9900 Lienz (AT)
(74) Vertreter: 2K Patentanwälte Blasberg Kewitz & Reichel

(57) **Zusammenfassung**

Offenbart wird eine Vorrichtung und ein Verfahren zur Herstellung von Formteilen (150), die jeweils einen vorgepressten Profilkörper-Rohling (151) aufweisen, der zumindest auf einem Teil seiner Oberfläche mit einer Oberflächenschutzfolie (152) versehen wird, wobei der Rohling (151) durch Kaltpressen eines Gemisches von Faserstoffen und wärmehärtenden Bindemitteln hergestellt wird (11), und wobei die Oberflächenschutzfolie (152) aus einer mit duroplastischem Tränkharz getränkten Trägerschicht hergestellt wird (12), wobei der Profilkörper-Rohling (151) in ein Werkzeugunterteil (120) einer Heißpressvorrichtung (100) gelegt wird und die Oberflächenschutzfolie (152) auf den Profilkörper-Rohling (151) aufgelegt wird (13), um beide in einem Heißpressvorgang zu verbinden (14), wobei die Oberflächenschutzfolie (152) vor dem Heißpressvorgang eine Endfeuchte von 2-20 Gew.% aufweist. Das Verfahren zeichnet sich dadurch aus, dass für den Heißpressvorgang ein Werkzeugoberteil (110) der Heißpressvorrichtung (100) nicht sofort auf das Werkzeugunterteil (120) zum Schließen der Heißpressvorrichtung (100) abgesenkt wird, sondern das Werkzeugoberteil (110) zunächst für eine Verweildauer von 1-5 Sekunden in einer teilabgesenkten Position beabstandet (D1, D2) zu dem Profilkörper-Rohling (151) und der darauf befindlichen Oberflächenschutzfolie (152) gehalten wird (14a), um durch Wärmeabstrahlung des Werkzeugoberteil (110) die Oberflächenschutzfolie (152) vor dem Schließen (14b) der Heißpressvorrichtung (100) vorzuwärmen.

## Beschreibung

Die Erfindung betrifft ein Verfahren und eine Vorrichtung zur Herstellung von Formteilen, insbesondere von Formteilen, die einen vorgepressten Profilkörper-Rohling aufweisen, der aus einem Gemisch von Faserstoffen und wärmehärtenden Bindemitteln besteht und zumindest auf Teilen seiner Oberfläche mit einer Oberflächenschutzfolie versehen ist.

Formteile der eingangs genannten Art werden in einem mehrstufigen Verfahren hergestellt, wobei der Rohling durch Kaltpressen eines Gemisches von Faserstoffen und wärmehärtenden Bindemitteln hergestellt wird, und wobei die Oberflächenschutzfolie aus einer mit duroplastischem Tränkharz getränkten Trägerschicht hergestellt wird. In einem Heißpressvorgang wird dann der Rohling mit der Oberflächenschutzfolie verbunden und in die endgültige Form entsprechend dem gewünschten Formteil gebracht. Dazu wird Profilkörper-Rohling in ein Werkzeugunterteil einer Heißpressvorrichtung gelegt und die Oberflächenschutzfolie wird auf den Profilkörper-Rohling aufgelegt, welche vor dem Heißpressvorgang eine Endfeuchte von 2-20 Gew.% aufweist.

Die bekannten Verfahren und Vorrichtungen werden z.B. in den folgenden Dokumenten offenbart: DE 42 10 528 A1, US 2015/0115 505 A1, US 5 178 708 A, EP 0 763 387 B1 und EP 0 156 926 A1.

Die Anmelderin hat durch intensive Anwendung dieser Verfahren vorteilhafte Weiterentwickelungen erarbeitet, zu denen auch die vorliegende Erfindung zählt.

Das erfindungsgemäße Verfahren zeichnet sich dadurch aus, dass für den Heißpressvorgang ein Werkzeugoberteil der Heißpressvorrichtung nicht sofort auf das Werkzeugunterteil zum Schließen der Heißpressvorrichtung abgesenkt wird, sondern das Werkzeugoberteil zunächst für eine Verweildauer von 1-5 Sekunden in einer teilabgesenkten Position beabstandet zu dem Profilkörper-Rohling und der darauf befindlichen Oberflächenschutzfolie gehalten wird, um durch Wärmeabstrahlung des Werkzeugoberteil die Oberflächenschutzfolie vor dem Schließen der Heißpressvorrichtung vorzuwärmen.

Die erfindungsgemäße Heißpressvorrichtung weist im Wesentlichen das Werkzeugoberteil und das Werkzeugunterteil sowie einen gesteuerten Antrieb auf, um zum Schließen der Heißpressvorrichtung das Werkzeugoberteil auf das Werkzeugoberteil abzusenken und zeichnet sich dadurch aus, dass der steuerbare Antrieb das Werkzeugoberteil nicht sofort auf das Werkzeugunterteil zum Schließen der Heißpressvorrichtung absenkt, sondern das Werkzeugoberteil zunächst für eine Verweildauer von 1-5 Sekunden in einer teilabgesenkten Position beabstandet zu einem in dem Werkzeugoberteil befindlichen Profilkörper-Rohling und einer darauf befindlichen Oberflächenschutzfolie hält, um durch Wärmeabstrahlung des Werkzeugoberteil die Oberflächenschutzfolie vor dem Schließen der Heißpressvorrichtung vorzuwärmen.

Vorteile der Erfindung: Die Vorwärmung der Oberflächenschutzfolie führt zu einer Erhöhung der Elastizität der Folie, da die Reaktivität des Harzes angeregt wird, ohne dass dieses vorher auskondensiert. Die Oberflächenschutzfolie passt sich dadurch optimal der Kontur des Profilkörperrohlings an. Hierdurch wird ein Reißen bzw. Bruch der Folie an den Steilkanten des Rohlings verhindert.

Besonders vorteilhafte, bevorzugte Ausgestaltungen ergeben sich aus den Unteransprüchen:
So wird vorzugsweise in der teilabgesenkten Position das Werkzeugoberteil mit einem Mindestabstand von 2 mm zu der auf dem Profilkörper-Rohling befindlichen Oberflächenschutzfolie gehalten und wird mit einem Maximalabstand von 50 mm zu der auf dem Profilkörper-Rohling befindlichen Oberflächenschutzfolie gehalten. Das Werkzeugoberteil wird von dem steuerbaren Antrieb der Heißpressvorrichtung entsprechend bewegt und gehalten. Versuche der Anmelderin haben ergeben, dass die im wesentlich durch Wärmestrahlung erreichte Vorwärmung der Oberflächenschutzfolie besonders gut gelingt, wenn das Werkzeugoberteil sich dazu in einem Abstand von 2-50 mm befindet.

Vorzugsweise wird das Werkzeugoberteil hydraulisch mittels eines vorgebaren Druckaufbaus abgesenkt, um letztlich gegen den in dem Werkzeugunterteil liegenden Profilkörper-Rohling und der darauf befindlichen Oberflächenschutzfolie einen vorbestimmbaren Druck aufzubauen, der zwischen 220-330 bar liegt, wobei die Verweildauer umgekehrt proportional abhängig von dem Druckaufbau eingestellt wird. Somit wird bei einem schnellen Druckaufbau (hoher Gradient) die Verweilzeit kürzer eingestellt und umgekehrt. Der Druckaufbau erfolgt in einer Hydraulik des steuerbaren Antriebs der Heißpressvorrichtung und wird entsprechend gesteuert, wobei es sich gezeigt hat, dass der Druckaufbau vorzugsweise innerhalb von 2-10 Sekunden erreicht werden sollte.

Was die Betriebstemperatur der Heißpressvorrichtung angeht, so wird die Betriebstemperatur des Werkzeugoberteils vorzugsweise auf eine obere Temperatur zwischen 130-180°C eingestellt; und die Betriebstemperatur des Werkzeugunterteils wird vorzugsweise auf eine untere Temperatur zwischen 120-180°C eingestellt. Das Beheizen des Werkzeugs wird von einer steuerbare Heizeinrichtung der Heißpressvorrichtung durchgeführt, wobei es entscheidend ist, dass die Betriebstemperatur des Werkzeugoberteils stets höher ist als die des Werkzeugoberteils. Vorzugsweise wird zwischen der oberen und unteren Temperatur eine Differenz von mindestens 10° C eingehalten, in den meisten Anwendungen im Bereich von 20-25°C.

In vielen Anwendungen wird in das Werkzeugunterteil zu unterst zunächst eine Schicht aus harzgetränktem Papier eingelegt und darauf wird dann der Profilkörper-Rohling eingelegt. Außerdem wird eine Kreppschicht aus harzgetränktem Zellstoffmaterial auf den Profilkörper-Rohling aufgelegt und dann wird darauf die Oberflächenschutzfolie aufgelegt. So erreicht man eine Sandwich-Struktur, die mechanisch besonders stabil ist, wobei die (zu unterst liegende) Schicht aus harzgetränktem Papier als ein mechanisch wirkender Gegenzug zu der (oben liegenden) Kreppschicht wirkt.

Die Erfindung wird anhand der beiliegenden schematischen Zeichnungen veranschaulicht, die folgendes darstellen:
- Fig. 1: zeigt eine erfindungsgemäße Vorrichtung zum Heißpressen und Beschichten eines Profilkörper-Rohlings mit einer Oberflächenschutzfolie, wobei die Vorrichtung (Heißpresse) sich im geöffneten Zustand befindet;
- Fig. 2: zeigt die Vorrichtung (Heißpresse) in einem Zustand, bei das Werkzeugoberteil zum Schließen der Heißpresse auf das Werkzeugunterteil abgesenkt wird, wobei das Werkzeugoberteil für eine Verweildauer in einer teilabgesenkten Position verbleibt;
- Fig. 3: zeigt im Querschnitt den Aufbau des fertigen Formteils; und
- Fig. 4: zeigt ein Ablaufdiagramm für ein erfindungsgemäßes Verfahren.

Die Erfindung wird nun im Detail anhand von Ausführungsbeispielen mit Bezugnahme auf diese Zeichnungen beschrieben.

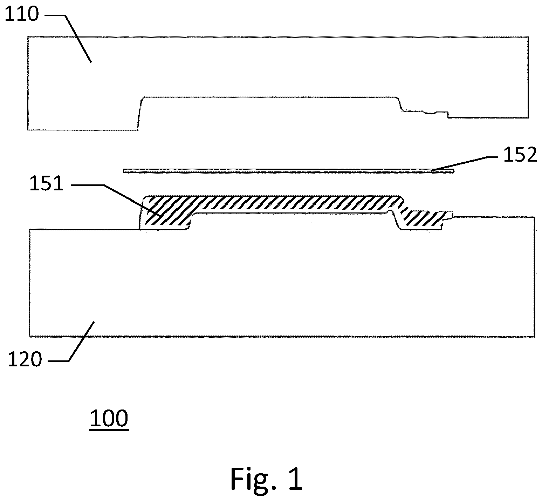

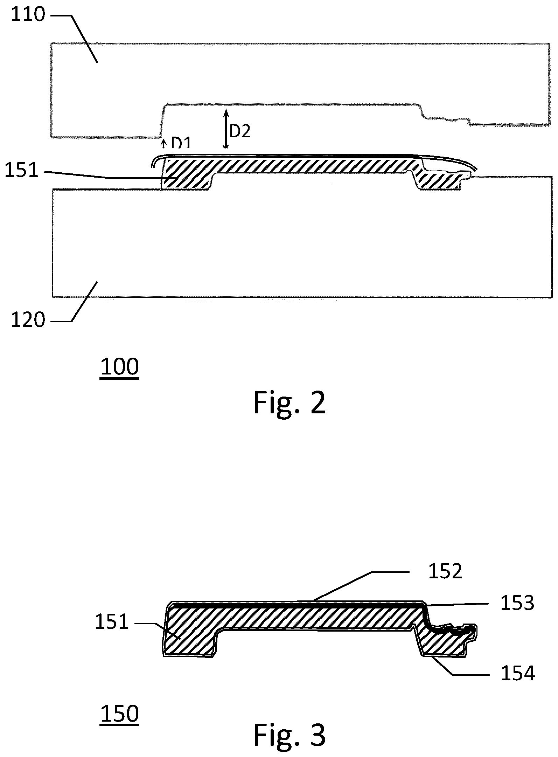

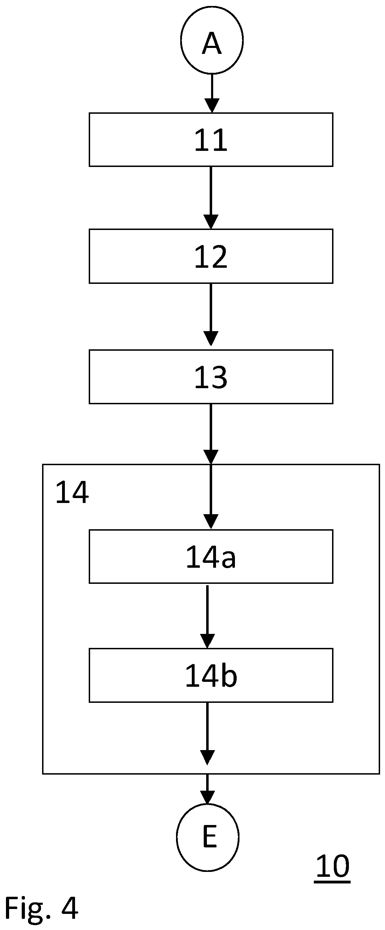

Das Verfahren 10 (s. Fig. 4) dient zur Herstellung von Formteilen (siehe Formteil 150 in Fig. 3) und umfasst folgende Schrittfolgen:
Schrittfolge 11: Es wird ein Profilkörper-Rohling vorgepresst, der als Kern (s. 151 in den Fig. 1-3) dient und auch als Vorpressling bezeichnet wird. Das Vorpressen erfolgt z.B. durch Kaltpressen eines Gemisches von Faserstoffen und wärmehärtenden Bindemitteln und ist an sich bekannt. Dazu hat die Anmelderin ein seit Jahren bewährtes Verfahren entwickelt und fortlaufend verbessert. Der Vorpressling bzw. Rohling wird einstückig aus einer mit span- oder faserförmigen und mit Bindemittel versetzten Pressmasse hergestellt. Bei der Pressmasse kann es sich beispielsweise um zerkleinerte lignozellulosehaltige Teilchen, wie etwa zerkleinerte und getrocknete Holzspänne, Bagassefasern und ähnliches, handeln, denen ein wärmehärtbares Kunstharz, wie z.B. ein Melamin-Harnstoffformaldehyd-oder Phenolformaldehyd-Harz beigemischt ist. Als Fasern können auch Fasergemische von verschiedenen Werkstoffen verwendet werden, denen entsprechende, vorzugsweise organische, Bindemittel zugemischt sind. Zum Herstellen des Rohlings 151 wird das Gemisch in ein Vorpresswerkzeug (nicht dargestellt) mit einer Schichtdicke eingefüllt, die etwa das drei- bis siebenfache des fertigen Formkörpers betragen kann. Durch Einfahren eines Pressstempels wird die Masse vorgepresst und dabei nahezu auf ihr Endmaß hin verdichtet. Der derart hergestellte Vorpressling bzw. Rohling 151 wird dann später mittels Heißpressen (s. Schrittfolge 14) mit einer Oberflächenschutzschicht versehen und unter Druck und Temperatureinwirkung ausgehärtet. Die Oberflächenschutzschicht kann auch Dekorzwecken dienen und besteht aus einer Oberflächenschutzfolie (siehe 152 in Fig. 1-3), die in der Schrittfolge 12 aus einer mit duroplastischem Tränkharz getränkten Trägerschicht hergestellt wird. Die Trägerschicht besteht z.B. aus einem mit Harz getränktem Papier.

Schrittfolge 12: Dieser Teil des Verfahrens ist ebenfalls an sich bekannt und wird von der Anmelderin seit Jahren angewendet. In einer (hier nicht dargestellten) Anlage wird die ggf. mit einer zum Lack reaktiven Komponente versehene Trägerfolie mit einem Lack versehen. Dazu wird die Trägerfolie in einer Durchlauf-Gießanlage gleichmäßig mit dem Lack beschichtet. Wie gesagt, kann bei der Trägerfolie es sich beispielsweise um eine mit Melaminharz getränkte Papierfolie handeln. Sie kann auch mit einem Haftvermittler zur Verbesserung der Haftung der Lackschicht, beispielsweise einem Acrylat, versehen sein. In der Anlage wird die mit dem Lack beschichtete Trägerfolie in einem Trockner getrocknet, wobei zu beachten ist: Wenn es sich bei dem Lack um einen durch Wärmezufuhr trocknenden Lack handelt, dann soll beim Trocknen nur so viel Wärme zugeführt werden, dass kein vollständiges Auskondensieren der Trägerfolie erfolgt. Beim Lack kann es sich in diesem Fall z.B. um einen Polyurethanlack handeln. Es können aber auch mittels UV-Licht aushärtende oder elektronenstrahlhärtende Lacke verwendet werden.

Um eine besonders widerstandsfähige Oberflächenschutzfolie 152 mit hoher Witterungsbeständigkeit herzustellen (Schrittfolge 12), wird vorzugsweise als Tränkharz ein wässriges Kondensationsharz verwendet, welches bei der Beschichtung etwa 50 Gew.% an flüchtigen Bestandteilen enthält, wobei die getränkte Folie vor dem Lackiervorgang noch 8 - 20 Gew.% an flüchtigen Bestandteilen enthält. Als Lack wird vorzugsweise ein wässriges System aus einem OH-Gruppen enthaltenden Acrylpolymerisat, Polyurethanpolymerisat oder Polyestercopolymerisat verwendet, welchem eine Vernetzungskomponente zugesetzt wurde, die einerseits das Lackbindemittel vernetzt und andererseits eine chemische Verbindung mit dem Tränkharz der Trägerfolie vermittelt. Die Folie wird vor dem Aufbringen auf den Profilkörper, also vor dem Heißpressvorgang (Schrittfolge 14), auf eine Endfeuchte von 2 - 20 Gew. %, vorzugsweise 4 - 10 Gew. %, getrocknet.

Die Schrittfolgen 13 und 14 betreffen den wesentlichen Teil des erfindungsgemäßen Verfahrens 10 und beziehen sich auf das Heißpressen des Formteils 150 mit der damit einhergehenden Beschichtung, die durch die erfindungsgemäße Vorrichtung 100 (s. Fig. 1-3) ausgeführt wird:
Schrittfolge 13: Der Profilkörper-Rohling 151 wird in bzw. auf das Werkzeugunterteil 120 der Vorrichtung 100 gelegt; über den Rohling 151 wird dann die Oberflächenschutzfolie 152 gelegt, um im anschließenden Heißpressvorgang (Schrittfolge 14) bei geschlossener Presse unter Druck (220-330 bar) und Hitze (ca. 130-180°C) zusammen mit dem Rohling 151 in die endgültige Form zu dem gewünschten beschichteten Formteil 150 geformt und ausgehärtet zu werden. Schrittfolge 14: Das Heißpressen erfolgt im Wesentlichen in zwei Schritten 14a und 14b.

Im Schritt 14a wird das Werkzeugoberteil 110 nicht ganz abgesenkt, so dass es mit dem Werkzeugunterteil 120 zusammen kommt und die Presse schließt. Vielmehr wird das Absenken des Werkzeugsoberteils 110 durch den steuerbaren Antrieb (nicht dargestellt) zeitweise gestoppt, so dass das Werkzeugsoberteil 110 in einer teilabgesenkten Position für eine vorgebbare Zeitdauer von ca. 1-5 Sekunden, vorzugsweise etwa 3 Sekunden, verweilt. Diese Situation kann man als Haltezustand bezeichnen und wird in der Fig. 2 dargestellt:
Das Werkzeugoberteil 110 verweilt in einer zur Oberflächenschutzfolie 152 beabstandeten Position, so dass ein Mindestabstand D1 von 2 mm eingehalten wird. Mit D2 wird hier ein Maximalabstand bezeichnet, der sich aufgrund des Profils des Rohlings bzw. des Werkzeugoberteils 110 ergibt; er sollte kleiner als 50 mm sein.

Wichtig ist, dass sich Werkzeugoberteil 110 und aufgelegte Folie 152 sich im Haltezustand nicht berühren, dass aber die Abstände D1 und D2 auch nicht zu groß sind, damit durch Wärmeabstrahlung des Werkzeugoberteil 110 die Oberflächenschutzfolie 152 vor dem Schließen der Heißpressvorrichtung 100 vorgewärmt werden kann.

Schritt 14b: Erst nach Ablauf der vorgebaren Zeitdauer von 1-5 Sekunden wird das Werkzeugoberteil 110 vollkommen abgesenkt, so dass sich die Heißpresse schließt. Erst jetzt erfolgt das eigentliche Heißpressen zu dem gewünschten Formteil. Hierbei wird der Rohling bzw. Vorpressling 151 unter Einwirkung von Druck und Wärme (hier z.B. 150-170 °C) in seine endgültige Form gebracht, dabei ausgehärtet und gleichzeitig mit der Oberflächenschutzfolie 152 verbunden umhüllt werden. Es können auch beide Seiten des Rohlings mit einer Folie versehen werden, z.B. die Oberseite mit einer Dekorfolie und die Unterseite mit einer neutralen Schutzfolie; jede Folie kann z.B. eine Dicke von ca. 0,1 bis 2 mm aufweisen. Der Rohling kann für verschiedenste Formteile vorgepresst werden, wie z.B. für Fensterbänke, Balkonverkleidungen oder Tischplatten, die z.B. in der Mitte eine Plattenstärke von etwa 16 mm (6-25 mm) und am Rand eine Stärke von etwa 30 mm (10-40 mm) aufweisen können. Die derart hergestellten Formteile (siehe Beispiel 150 in Fig. 3) sind besonders gut geeignet, im Außenbereich, d. h. auf Balkonen, Terrassen, Plätzen und in Gärten, aufgestellt oder verbaut zu werden, da sie sich als sehr witterungsbeständig erwiesen haben. Denn bei dem genannten Herstellungsverfahren wird der Rohling bei Temperaturen von etwa 150-170 °C heiß gepresst, wodurch die gleichartigen Harze in Kern- und Oberflächenmaterial aushärten, so dass ein Materialverbund entsteht, der besonders widerstandsfähig gegen Hitze, Nässe und mechanische Beanspruchung ist. Die eingesetzte Folie härtet also erst im Heißpressvorgang vollständig aus, wird durch das Vorwärmen im Schritt 14a aber kurz vor dem eigentlichen Heißpressen optimal vorgewärmt und kann sich besser an das Profil des Rohlings anlegen, so dass Materialspannungen in der Oberflächenschutzschicht noch besser vermieden werden.

Die Betriebstemperatur des Werkzeugoberteils 110 sollte auf eine obere Temperatur zwischen 130-180°C eingestellt werden und die Betriebstemperatur des Werkzeugunterteils 120 auf eine untere Temperatur zwischen 120-180°C, wobei zwischen der oberen und unteren Temperatur eine Differenz von mindestens 10° C eingehalten werden sollte, vorzugweise von 20-25°C.

Das anzufertigende Formteil kann auch in einer Sandwichbauweise aufgebaut sein: Dazu in das Werkzeugunterteil 120 zunächst eine Schicht aus harzgetränktem Papier 154 (s. Fig. 3) eingelegt und darauf wird dann der Profilkörper-Rohling 151 eingelegt. Außerdem wird eine Kreppschicht 153 aus harzgetränktem Zellstoffmaterial auf den Profilkörper-Rohling 151 aufgelegt dann wird darauf die Oberflächenschutzfolie 152 aufgelegt. Im fertig gepressten Zustand bildet die Schicht aus harzgetränktem Papier 154 den Unterzug bzw. den mechanisch wirkenden Gegenzug zu der Kreppschicht 153, die den Oberzug darstellt. Die Dimensionierung von Oberzug und Unterzug/Gegenzug erfolgt abhängig von der Kontur des Profilkörpers sowie der benötigten mechanischen Beanspruchbarkeit des fertigen Formteils und dient vornehmlich der Vermeidung von Materialverzug.

### Bezugszeichenliste

- 100: Heißpressvorrichtung
- 110: Werkzeugoberteil
- 120: Werkzeugunterteil

- 150: Formteil
- 151: Profilkörper-Rohling
- 152: Oberflächenschutzfolie
- 153: Kreppschicht aus harzgetränktem Zellstoffmaterial (Oberzug)
- 154: Schicht aus harzgetränktem Papier (Unter- bzw. Gegenzug)

- D1: Mindestabstand zwischen Werkzeugoberteil und Oberflächenschutzfolie
- D2: Maximalabstand zwischen Werkzeugoberteil und Oberflächenschutzfolie

- 10: Verfahren zur Herstellung von Formteilen
- A, E: Anfang bzw. Ende des Verfahrens
- 11: Schrittfolge zum Vorpressen des Profilkörper-Rohlings
- 12: Schrittfolge zum Fertigen der Oberflächenschutzfolie
- 14: Schrittfolge zum Heißpressen des gewünschten Formteils
- 14a: Schritt mit Halten der Werkzeugoberteils auf Distanz
- 14b: Schritt mit Schließen der Presse und Fertigstellen des Formteils

## Patentansprüche

1. Verfahren (10) zur Herstellung von Formteilen (150), die jeweils einen vorgepressten Profilkörper-Rohling (151) aufweisen, der zumindest auf einem Teil seiner Oberfläche mit einer Oberflächenschutzfolie (152) versehen wird, wobei der Rohling (151) durch Kaltpressen eines Gemisches von Faserstoffen und wärmehärtenden Bindemitteln hergestellt wird (11), und wobei die Oberflächenschutzfolie (152) aus einer mit duroplastischem Tränkharz getränkten Trägerschicht hergestellt wird (12), wobei der Profilkörper-Rohling (151) in ein Werkzeugunterteil (120) einer Heißpressvorrichtung (100) gelegt wird und die Oberflächenschutzfolie (152) auf den Profilkörper-Rohling (151) aufgelegt wird (13), um beide in einem Heißpressvorgang zu verbinden (14), wobei die Oberflächenschutzfolie (152) vor dem Heißpressvorgang eine Endfeuchte von 2-20 Gew.% aufweist, **dadurch gekennzeichnet,**
**dass** für den Heißpressvorgang ein Werkzeugoberteil (110) der Heißpressvorrichtung (100) nicht sofort auf das Werkzeugunterteil (120) zum Schließen der Heißpressvorrichtung (100) abgesenkt wird, sondern das Werkzeugoberteil (110) zunächst für eine Verweildauer von 1-5 Sekunden in einer teilabgesenkten Position beabstandet (D1, D2) zu dem Profilkörper-Rohling (151) und der darauf befindlichen Oberflächenschutzfolie (152) gehalten wird (14a), um durch Wärmeabstrahlung des Werkzeugoberteils (110) die Oberflächenschutzfolie (152) vor dem Schließen (14b) der Heißpressvorrichtung (100) vorzuwärmen.

2. Verfahren (10) nach Anspruch 1, **dadurch gekennzeichnet, dass** in der teilabgesenkten Position das Werkzeugoberteil (110) mit einem Mindestabstand (D1) von 2 mm zu der auf dem Profilkörper-Rohling (151) befindlichen Oberflächenschutzfolie (152) und mit einem Maximalabstand (D2) von 50 mm zu der auf dem Profilkörper-Rohling (151) befindlichen Oberflächenschutzfolie (152) gehalten wird.

3. Verfahren (10) nach Anspruch 1 oder 2, **dadurch gekennzeichnet, dass** das Werkzeugoberteil (110) hydraulisch mittels eines vorgebaren Druckaufbaus abgesenkt wird, um letztlich gegen den in dem Werkzeugunterteil (120) liegenden Profilkörper-Rohling (151) und der darauf befindlichen Oberflächenschutzfolie (152) einen vorbestimmbaren Druck von 220-330 bar aufzubauen, wobei die Verweildauer umgekehrt proportional abhängig von dem Druckaufbau eingestellt wird.

4. Verfahren (10) nach Anspruch 3, **dadurch gekennzeichnet, dass** der Druckaufbau innerhalb von 2-10 Sekunden erreicht wird.

5. Verfahren (10) nach einem der vorhergehenden Ansprüche, **dadurch gekennzeichnet, dass** die Betriebstemperatur des Werkzeugoberteils (110) auf eine obere Temperatur zwischen 130-180°C eingestellt wird und die Betriebstemperatur des Werkzeugunterteils (120) auf eine untere Temperatur zwischen 120-180°C eingestellt wird, wobei zwischen der oberen und unteren Temperatur eine Differenz von mindestens 10° C eingehalten wird, vorzugweise von 20-25°C.

6. Verfahren (10) nach einem der vorhergehenden Ansprüche, **dadurch gekennzeichnet, dass** in das Werkzeugunterteil (120) zunächst eine Schicht aus harzgetränktem Papier (154) eingelegt wird und darauf dann der Profilkörper-Rohling (151) eingelegt wird.

7. Verfahren (10) nach einem der vorhergehenden Ansprüche, **dadurch gekennzeichnet, dass** in das Werkzeugunterteil (120) eine Kreppschicht (153) aus harzgetränktem Zellstoffmaterial auf den Profilkörper-Rohling (151) aufgelegt wird und darauf dann die Oberflächenschutzfolie (152) aufgelegt wird.

8. Verfahren (10) nach Ansprüchen 6 und 7, **dadurch gekennzeichnet, dass** die Kreppschicht (153) zusammen mit dem Profilkörper-Rohling (151) und der darunter befindlichen Schicht aus harzgetränktem Papier (154) eine mechanisch besonders stabile Sandwich-Anordnung bilden, wobei die Schicht aus harzgetränktem Papier (154) als ein mechanisch wirkender Gegenzug zu der Kreppschicht (153) wirkt.

9. Heißpressvorrichtung (100) zur Herstellung von Formteilen (150) gemäß dem Verfahren nach einem der Ansprüche 1-8, wobei die Heißpressvorrichtung (100) ein Werkzeugoberteil (110) und ein Werkzeugunterteil (120) sowie einen gesteuerten Antrieb aufweist, um zum Schließen der Heißpressvorrichtung (100) das Werkzeugoberteil (110) auf Werkzeugoberteil (110) abzusenken,
**dadurch gekennzeichnet,**
**dass** der steuerbare Antrieb das Werkzeugoberteil (110) nicht sofort auf das Werkzeugunterteil (120) zum Schließen der Heißpressvorrichtung (100) absenkt, sondern das Werkzeugoberteil (110) zunächst für eine Verweildauer von 1-5 Sekunden in einer teilabgesenkten Position beabstandet (D1, D2) zu einem in dem Werkzeugoberteil (110) befindlichen Profilkörper-Rohling (151) und einer darauf befindlichen Oberflächenschutzfolie (152) hält, um durch Wärmeabstrahlung des Werkzeugoberteils (110) die Oberflächenschutzfolie (152) vor dem Schließen der Heißpressvorrichtung (100) vorzuwärmen.

10. Heißpressvorrichtung (100) nach Anspruch 9, **dadurch gekennzeichnet** der steuerbare Antrieb das Werkzeugoberteil (110) in der teilabgesenkten Position so hält, dass das Werkzeugoberteil (110) sich in einem Mindestabstand (D1) von 2 mm zu der auf dem Profilkörper-Rohling (151) befindlichen Oberflächenschutzfolie (152) und in einem Maximalabstand (D2) von 50 mm zu auf dem Profilkörper-Rohling (151) befindlichen Oberflächenschutzfolie (152) befindet.

11. Heißpressvorrichtung (100) nach Anspruch 9 oder 10, **dadurch gekennzeichnet, dass** der steuerbare Antrieb eine Hydraulik aufweist, die das Werkzeugoberteil (110) mittels eines vorgebaren Druckaufbaus absenkt, um letztlich gegen den in dem Werkzeugunterteil (120) liegenden Profilkörper-Rohling (151) und der darauf befindlichen Oberflächenschutzfolie (152) einen vorbestimmbaren Druck von 220-330 bar aufzubauen, wobei der steuerbare Antrieb die Verweildauer umgekehrt proportional abhängig von dem Druckaufbau einstellt.

12. Heißpressvorrichtung (100) nach Anspruch 11, **dadurch gekennzeichnet, dass** der steuerbare Antrieb den Druckaufbau in der Hydraulik so steuert, dass der Druckaufbau innerhalb von 2-10 Sekunden erreicht wird.

13. Heißpressvorrichtung (100) nach einem der Ansprüche 9-12, **dadurch gekennzeichnet, dass** die Heißpressvorrichtung (100) mindestens eine steuerbare Heizeinrichtung aufweist, die die Betriebstemperatur des Werkzeugoberteils (110) auf eine obere Temperatur zwischen 130-180°C einstellt und die Betriebstemperatur des Werkzeugunterteils (120) auf eine untere Temperatur zwischen 120-180°C einstellt, wobei zwischen der oberen und unteren Temperatur eine Differenz von mindestens 10° C eingehalten wird, vorzugweise von 20-25°C.
